# EUROPÄISCHE PATENTANMELDUNG

(11) **EP 4 610 014 A1**
(43) Veröffentlichungstag der Anmeldung: **03.09.2025**
(21) Anmeldenummer: 24160903.1
(22) Anmeldetag: 01.03.2024
(51) Int. Cl.: B29C 43/42, B29C 65/70, B29C 65/00, B29L 23/00, B29L 31/00, B29L 23/20, B29C 43/02, B29C 43/18, B29C 43/36

(54) **VORRICHTUNG ZUM HERSTELLEN VON VERPACKUNGSTUBEN, VERPACKUNGSTUBE UND VERFAHREN ZUR HERSTELLUNG VON VERPACKUNGSTUBEN**

(71) Anmelder: PackSys Global AG, 8630 Rüti (CH)
(72) Erfinder: Vollenweider, Beat, 8623 Wetzikon (CH)
(74) Vertreter: Patent- und Rechtsanwälte Behrmann Wagner PartG mbB

(57) **Zusammenfassung**

Verpackungstube mit einem, bevorzugt durch Formpressen hergestellten, Tubenkopfes, der in einem Schulterbereich mit einem, bevorzugt aus einem Mehrschichtlaminat hergestellten, separaten Tubenkörper stoffschlüssig verbunden ist, wobei dass in einer Längsrichtung (L) an einen Tubenhals (10) des Tubenkopfes (07) anschließend ein einstückig mit dem Tubenkopf (07) [als Teil des Tubenkopfes (07)] ausgebildeter, umgedrehter Tubendeckel (11) angeordnet ist, wobei der Tubenhals (10) und der Tubendeckel (11) über einen Sollbruchabschnitt (12) des Tubenkopfes (07) miteinander verbunden sind.

## Beschreibung

Die vorliegende Erfindung betrifft eine Vorrichtung zum Herstellen von Verpackungstuben nach dem Oberbegriff des Anspruchs 1, eine Verpackungstube nach dem Oberbegriff des Anspruchs 8 und ein Verfahren zur Herstellung einer Verpackungstube nach dem Oberbegriff des Anspruchs 11.

Aus dem Stand der Technik sind unterschiedliche Technologien zur Herstellung von Verpackungstuben bekannt. Ein Ansatz beruht darauf nach Möglichkeit die gesamte Verpackungstube über einen werkzeuggebundenen Herstellungsprozess wie beispielsweise ein Spritzgussverfahren herzustellen. Dadurch ergeben sich aber Einschränkungen hinsichtlich der herstellbaren Geometrien. Gleichzeitig werden dadurch die Werkzeugkosten besonders hoch und die Werkzeugtechnologie besonders anspruchsvoll, weil in der Regel mit einfaltbaren oder kollabierbaren Werkzeugen gearbeitet werden muss, um ein zerstörungsfreies Entformen der Verpackungstuben zu ermöglichen.

Ein alternativer Ansatz sieht vor, dass zunächst ein, beispielsweise röhrenförmiger, Tubenkörper hergestellt wird, der dann nach einer Vereinzelung aus einer Endlostube mit einem Tubenkopf verbunden wird. Der Tubenkörper kann entweder aus einem mehrschichtigen Laminat, beispielsweise mit einer Längsschweißnaht, die ein bogenförmiges Laminat zu einer Rohrform umformt, hergestellt sein. Alternativ bestehen auch Ansätze, bei denen der Tubenkörper extrudiert wird.

In vielen Ansätzen wird der Tubenkopf zunächst mit einer offenen Auslassöffnung hergestellt, gegebenenfalls vor dem Befüllen der Verpackungstube versiegelt und in einem weiteren Verfahrensschritt, regelmäßig vor dem Befüllen der Verpackungstube, mit einem separat hergestellten Tubendeckel versehen und verschlossen.

Das separate Herstellen des Tubendeckels und das Verbinden des Tubendeckels mit dem Tubenkopf erfordert zusätzlichen Verfahrens- und Montageaufwand.

Für einteilig spritzgegossene Tuben lehrt die CN 217754844 U bereits einen Lösungsansatz, bei dem der Tubenkörper und der Tubenkopf samt einem daran in Längsrichtung anschließenden, umgedreht angeordneten Tubendeckel im Rahmen eines Spritzgussverfahrens hergestellt wird, wobei zwischen dem Tubenkopfende und dem Tubendeckel in Längsrichtung eine Sollbruchstelle ausgebildet ist, sodass der Tubendeckel über eine irreversible, destruktive Abtrennung vom Tubenkopf entfernt und in einer umgedrehten Ausrichtung zur Ausbildung einer wiederholt verbindbar und lösbaren Verbindung zwischen Tubendeckel und Tubenkopf an dem Tubenkopf befestigt und von diesem gelöst werden kann.

Die aus dem Stand der Technik bekannte Lösung erfordert einerseits hochkomplexe Formgebungswerkzeuge und hochgradig spezialisiertes Spritzgussverfahren, um die Tube samt Tubenkörper, Tubenkopf und Deckel in einem Spritzgussschritt auszuformen/herzustellen.

Weiterhin haben die insgesamt spritzgegossenen Tubenkörper den Nachteil, dass diese lediglich ein im Wesentliches homogenes Material aufweisen, welches auch den Tubenkopf sowie den Tubendeckel ausbildet. So kann jedoch nur eine sehr eingeschränkte Optimierung oder Anpassung des Tubenkörpers und der Verpackungstube an den Einsatzzweck erfolgen. Der Einsatzzweck kann jedoch unterschiedliche Funktionalitäten des Tubenkörpers notwendig machen, die beispielsweise eine Barriereschicht im Tubenkörper und/oder Tubenkopf notwendig machen. Auch das Einbetten von Materialanteilen aus nachwachsenden Materialien oder Recyclingmaterialien, ohne dass diese mit dem verpackten Gut der Verpackungstube in Kontakt kommen könnten, ist bei klassischen Spritzgussverfahren nicht möglich.

Vor diesem Hintergrund besteht die Aufgabe der vorliegenden Erfindung darin, die Nachteile im Stand der Technik zu überwinden und insbesondere eine Verpackungstube ein Verfahren zur Herstellung einer Verpackungstube und eine Vorrichtung zur Herstellung einer Verpackungstube vorzuschlagen, bei denen die Vorteile eines einstückig mit dem Tubenkopf verbundenen Tubendeckels und der Ausbildung einer Sollbruchstelle mit den Vorteilen von Verpackungstuben kombiniert werden, die, insbesondere aufgrund ihrer Flexibilität im Hinblick auf die Ausgestaltung des Tubenkörpers, optimal an Einsatzzwecke und/oder Umweltschutz- und Nachhaltigkeitsgesichtspunkte anpassbar sind.

Diese Aufgabe wird im Hinblick auf eine Vorrichtung zum Herstellen einer Verpackungstube mit den Merkmalen des Anspruchs 1 gelöst.

Im Hinblick auf eine Verpackungstube wird die Aufgabe mit den Merkmalen des Anspruchs 8 gelöst.

Im Hinblick auf ein Verfahren zur Herstellung von Verpackungstuben wird die Aufgabe mit den Merkmalen des Verfahrensanspruchs 11 gelöst.

Vorteilhafte Ausführungsformen sind Gegenstand der nachfolgenden Beschreibung, der Figurenbeschreibung, der Figuren sowie der Unteransprüche.

Auch zur Vermeidung von unnötigen Wiederholungen sollen nachfolgend alle vorrichtungsmäßig offenbarten und beanspruchten Merkmale auch als entsprechend verfahrensmäßig offenbart und beanspruchbar gelten, und umgekehrt.

Die erfindungsgemäße Vorrichtung zum Herstellen einer Verpackungstube umfasst ein Formgebungswerkzeug, zum Ausformen eines Tubenkopfes, insbesondere durch Verpressen eines Vorformlings unter Verbinden des Tubenkopfes mit einem, bevorzugt aus einem Mehrschichtlaminat hergestellten, Tubenkörper, zur Herstellung der Verpackungstube, wobei das Formgebungswerkzeug mehrteilig ausgestattet, insbesondere mit einer Patrize und einer mehrteiligen Matrize ausgestaltet ist, in welches in einem geöffneten Zustand ein Vorformling und ein Tubenkörper einbringbar sind, und welches beim Übergang in einen geschlossenen Zustand den Tubenkopf aus dem Vorformling ausformt und die Verbindung mit dem Tubenkörper herstellt. Erfindungsgemäß ist dabei vorgesehen, dass das mehrteilige Formgebungswerkzeug so geformt ist, dass in dem geschlossenen Zustand eine Kavität umschlossen wird, die in einer Längsrichtung an einen Tubenhals des Tubenkopfes anschließend ein einstückig mit dem Tubenkopf oder als Teil des Tubenkopfes ausgebildeten, umgedrehten Tubendeckel ausbildet, wobei die Kavität zudem so geformt, dass der Tubenhals und der Tubendeckel über einen Sollbruchabschnitt des Tubenkopfes miteinander verbunden sind.

Das Grundkonzept der vorliegenden Erfindung basiert dementsprechend auf einem Tubenkopf, der mit einem parallel oder im Vorfeld hergestellten, separaten Tubenkörper verbunden wird, wobei im Rahmen der Ausformung des Tubenkopfes und der gleichzeitigen Verbindung mit dem Tubenkörper auch ein einstückig mit dem Tubenkopf verbundener, umgedrehter Tubendeckel ausgebildet wird, wobei ein Übergang zwischen dem Tubenhals und dem Tubendeckel die Auslassöffnung der Tube verschließt und gleichzeitig einen Sollbruchabschnitt ausbildet, sodass der einstückig ausgeformte Tubendeckel destruktiv und irreversibel vom Tubenkopf, insbesondere vom Tubenhals, entfernt werden kann, um in umgedrehter Ausrichtung abermals und mehrfach mit dem Tubenkopf verbunden und von diesem gelöst werden kann.

Die Erfindung hat dabei in überraschenderweise erreicht, dass das Entformen aus dem Formgebungswerkzeug trotz der erhöhten Komplexität aufgrund des ausgeformten Tubendeckels und der größeren Kräfte in Längsrichtung beim Entformen aus dem Formgebungswerkzeug keine oder kaum nachteilige Auswirkungen auf die noch frische und gegebenenfalls noch nicht vollständig verfestigte Verbindung zwischen Tubenkopf und Tubenkörper ausübt, welche insbesondere kurz nach dem Ausbilden der Verbindung durch Verformen des Vorformlings besonders empfindlich oder sensibel auf entsprechende Kräfte in Längsrichtung reagiert.

Mit anderen Worten ausgedrückt besteht die überraschende Erkenntnis der Erfindung darin, dass es möglich ist einen Tubenkopf mit samt einstückig angeformtem und über einen Sollbruchabschnitt verbundenen, umgedrehten Tubendeckel aus einem Vorformling auszuformen und im Rahmen der Ausformung gleichzeitig die Verbindung zu dem Tubenkörper herzustellen und diese Verbindung entsprechend innerhalb kürzester Zeit aus dem Formwerkzeug zu entnehmen, ohne dass die gesteigerten Anforderungen auf die Entformung negative Auswirkungen auf die Verbindung zwischen Tubenkörper und Tubenkopf ausüben.

Gemäß einer ersten, vorteilhaften Ausführungsform kann vorgesehen sein, dass die Matrize Ausnehmungen und Vorsprünge umfasst, die so geformt sind, dass im geschlossenen Zustand an dem Tubenhals radial nach außen ragende Sicherungsmittel und in dem Tubendeckel nach radial innen ragende Sicherungsmittels ausgebildet werden. Die Sicherungsmittel sind bevorzugt so komplementär ausgestaltet, dass über diese eine reversible Sicherung oder Befestigung des Tubendeckels am Tubenhals stattfinden kann, nachdem der Tubendeckel irreversibel und destruktiv vom Tubenhals entfernt und umgedreht wurde. Die Sicherungsmittel können beispielsweise als Gewinde, als Bajonettverschlussmittel und/oder als Rastmittel oder dergleichen ausgebildet sein. Gerade die radial nach innen ragenden Sicherungsmittel des Tubendeckels haben einen besonderen Einfluss auf die Entformung der Verpackungstube aus dem Formgebungswerkzeug. Daher ist es eine besondere Leistung der Erfindung die nach radial innen ragenden Sicherungsmittel des Tubendeckels auszubilden und den Tubendeckel aus dem Formgebungswerkzeug zu entformen, ohne dabei negative Einflüsse, Beschädigungen oder dergleichen auf die Verbindung zwischen dem frisch ausgeformten Tubenkopf und dem Tubenkörper zu bewirken.

In einer weiteren besonders vorteilhaften Ausgestaltung kann diesbezüglich vorgesehen sein, dass der Teil der Matrize, die die Innenoberfläche des Tubendeckels mit samt den nach radial innen ragenden Sicherungsmitteln ausbildet einstückig und/oder in radialer Richtung nicht kollabierbar oder nicht faltbar ausgebildet ist. Es hat sich in besonders überraschenderweise gezeigt, dass auch bei einer solchen Ausgestaltung der Matrize, bei der zum Entformen des Tubendeckels erhebliche Kräfte in Längsrichtung notwendig sind und auftreten, überraschenderweise die Verbindung zwischen Tubenkopf und Tubenkörper so stabil und zuverlässig ist, dass das Entformen zuverlässig gelingen kann, ohne dass die Verbindung zwischen Tubenkörper und Tubenkopf beeinträchtigt oder beeinflusst wird.

In diesem Zusammenhang kann dementsprechend besonders vorteilhaft vorgesehen sein, dass der Teil der Matrize, der die nach radial innen ragenden Sicherungsmittel ausbildet oder ausformt radial unbeweglich, insbesondere nicht kollabierbar, und bevorzugt einteilig ausgebildet ist.

Gemäß einer weiteren, besonders vorteilhaften Ausgestaltung der Vorrichtung kann vorgesehen sein, dass ein radial äußerer Teil der Matrize mehrere Werkzeugteile umfasst die so mit einem Antrieb verbunden sind, dass bei der Überführung des Formgebungswerkzeugs in einen geöffneten Zustand eine Bewegung nach radial außen, insbesondere zumindest auch eine Bewegung nach radial außen, stattfindet.

Dadurch kann in besonders vorteilhafterweise erreicht werden, dass eine Ausgleichsbewegung des einstückig angeformten Tubendeckels nach radial außen zur Überwindung der nach radial innen ragenden Sicherungsmittel gegenüber den komplementär ausgebildeten Konturen des Formgebungswerkzeugs bei einer Relativbewegung in Längsrichtung stattfinden kann. Überraschend ist dabei, dass diese Entformung, insbesondere des Tubendeckels, stattfindet, ohne dass der Tubendeckel nachhaltig plastisch verformt wird und ohne dass im Rahmen der Entformung eine zu große Kraft auf den Übergang zwischen dem Tubenkopf und dem Tubenkörper ausgeübt wird.

In einer weiteren, vorteilhaften Ausgestaltung kann vorgesehen sein, dass die Vorrichtung eine Siegeleinrichtung umfasst, die dazu eingerichtet ist, ein offenes Ende des Tubendeckels mit einer Siegelschicht, bevorzugt einer Siegelfolie, zu verschließen und die Siegelschicht mit dem Tubendeckel zu verbinden.

Die Siegelschicht kann in besonders vorteilhafterweise zur Konservierung der Hygienischen und sonstigen Zustände im Inneren des Tubendeckels dienen, sodass keine Gefahr besteht, dass der umgedrehte und mit seinem offenen Ende abragende Tubendeckel im Anschluss an die Herstellung verschmutzt, kontaminiert oder ansonsten nachteilig beeinträchtigt wird. Die Siegeleinrichtung kann die Siegelschicht im Rahmen der Versiegelung entweder auf das freie Ende des Tubendeckels begrenzen, insbesondere stanzen, schneiden, heißschneiden oder dergleichen oder alternativ bereits von den Abmessungen auf das freie Ende des Tubendeckels zugeschnittene Stücke der Siegelschicht weiterverarbeiten. Als Siegelschicht kommen grundsätzlich unterschiedliche Materialien infrage. Beispielsweise kann eine Siegelschicht ebenfalls aus einem einlagigen oder mehrlagigen Kunststoffmaterial bestehen. Alternativ kann eine Siegelschicht aus einem Material aus nachwachsenden Rohstoffen, wie beispielsweise Papier, Pappe oder Karton bestehen.

In einer weiteren, besonders vorteilhaften Ausgestaltung der Vorrichtung kann vorgesehen sein, dass die Siegeleinrichtung Schweißmittel oder Auftragsmittel für Haftvermittler und/oder Aktivierungsmittel für Haftvermittler umfasst, mit denen die Siegelschicht mit dem Tubendeckel verbunden wird. Sofern sich zwischen dem offenen Ende des Tubendeckels und der Siegelschicht eine Schweißverbindung ausbilden lässt, können besonders bevorzugt die Schweißmittel der Siegeleinrichtung zum Einsatz kommen. In diesem Fall kann durch das Verschweißen der Siegelschicht auch gleichzeitig ein Zuschnitt der Siegelschicht erfolgen und dementsprechend eine bahnenförmige oder streifenförmige Siegelschicht verwendet werden, die durch die Schweißmittel auf die entsprechende Abmessung zugeschnitten und gleichzeitig mit dem offenen Ende des Tubendeckels verbunden wird.

Alternativ, beispielsweise, wenn nicht verschweißbare Siegelschichten zum Einsatz kommen sollen, kann die Siegeleinrichtung Aktivierungsmittel zur Aktivierung von Haftvermittler umfassen, beispielsweise wenn die Siegelschicht teilweise oder vollständig bereits mit einem Haftvermittler benetzt ist. Zusätzlich oder alternativ kann auch vorgesehen sein, dass die Siegeleinrichtung Auftragsmittel für Haftvermittler umfasst, die beispielsweise zum Einsatz kommen können, um auf der Siegelschicht und/oder auf dem offenen Ende des Tubendeckels ein Haftvermittler aufzutragen.

Eine weitere, besonders vorteilhafte Ausgestaltung der Vorrichtung kann vorsehen, dass diese eine Markierungseinheit umfasst, die dazu eingerichtet ist die Siegelschicht mit optischen und/oder haptischen Markierungen zu versehen. Die Markierungseinheit kann beispielsweise als Drucker, als Prägeeinrichtung, als Gravureinrichtung, beispielsweise als Lasergravureinrichtung, oder dergleichen ausgebildet sein.

Es können im Rahmen der Markierung Informationen, Echtheits- und Validierungsmittel sowie Informationen zur Nachverfolgbarkeit und zum Qualitätsmanagement der Tubenherstellung auf der Siegelschicht vermerkt oder auf der Siegelschicht markiert werden. Alternativ können auch Markierungen in Form von Verzierungen aufgebracht werden.

In einer weiteren, besonders vorteilhaften Ausgestaltung der Vorrichtung kann vorgesehen sein, dass diese eine Füll- oder Einlegeeinrichtung aufweist, die dazu eingerichtet ist einen Gegenstand in den Tubendeckel einzubringen. Die Füll- oder Einlegeeinrichtung ist in der Vorrichtung zum Herstellen einer Verpackungstube, bevorzugt vor der Siegeleinrichtung angeordnet, sodass zunächst ein Gegenstand, beispielsweise ein Kleinspielzeug oder ein Werkzeug zur Benutzung oder Bedienung der Verpackungstube oder deren Inhalt, in den Tubendeckel eingelegt werden kann und der Tubendeckel anschließend mit der Siegeleinrichtung versiegelt oder eine Siegelschicht aufgebracht werden kann.

Die oben genannte Aufgabe wird auch durch eine Verpackungstube mit einem, bevorzugt durch Formpressen hergestellten, Tubenkopf, der in einem Schulterbereich mit einem, bevorzugt aus einem Mehrschichtlaminat hergestellten, separaten Tubenkörper stoffschlüssig verbunden ist dadurch gelöst, dass in einer Längsrichtung an einen Tubenhals des Tubendeckels anschließend ein einstückig mit dem Tubenkopf ausgebildeter oder als Teil des Tubenkopf ausgebildeter, umgedrehter Tubendeckel angeordnet ist, wobei der Tubenhals und der Tubendeckel über einen Sollbruchabschnitt des Tubenkopfes miteinander verbunden sind. Dadurch werden von der Verpackungstube die besonderen Vorteile eines individuellen, bevorzugt mehrlagigen, Tubenkörpers und eines Tubenkopfes mit angeformten Tubendeckel kombiniert, ohne dass am Übergang zwischen Tubenkörper und Tubenkopf die Besonderheiten des Tubenkopfes mit angeformten Tubendeckel zu einer Beeinträchtigung der Verbindung in technischer und/oder optischer Sicht führen.

Besonders vorteilhaft kann der Vorformling eine Co-Extrusion von unterschiedlichen Materialien umfassen. Damit kann gewährleitstet werden, dass der Tubenkopf und/oder der Tubendeckel eine Mehrlagenstruktur aufweist. Besonders bevorzugt kann eine Lage als Barrierelage oder Barriereschicht dienen, um Diffusion in die Tube (z.B. Sauerstoff) oder aus der Tube zu unterbinden oder wenigstens zu minimieren. Bei einer mehrlagigen oder mehrschichtigen Co-Extrusion des Vorformlings kann dadurch auch besonders vorteilhaft erreicht werden, dass auch der Tubendeckel eine entsprechende Mehrlagigkeit, bevorzugt mitsamt einer Barriereschicht, aufweist, wodurch die Eigenschaften des Tubendeckels insgesamt an die Erfordernisse des zu verpackenden Gutes angepasst werden können. Der Tubenkopf samt Tubendeckel kann alternativ zu einem Verpressen eines Vorformlings auch über ein Anspritzen eines Tubendeckels samt Tubenkopf an den Tubenkörper hergestellt sein und im Rahmen der Herstellung mit dem Tubenkörper verbunden werden.

In einer ersten, besonders vorteilhaften Ausführungsform der Verpackungstube kann vorgesehen sein, dass ein offenes Ende des Tubendeckels mit einer Siegelschicht, bevorzugt einer Siegelfolie, verschlossen ist. Dadurch kann verhindert werden, dass Schmutz, Staub oder sonstige Fremdkörper in den Tubendeckel eindringen, bevor dieser entlang des Sollbruchabschnitts destruktiv vom Tubenkopf getrennt und in einer umgedrehten Ausrichtung auf den Tubenkopf aufgebracht wird. Die Siegelschicht kann bevorzugt so ausgebildet sein, dass sie händisch und/oder werkzeuglos entfernbar ist. Dazu kann die Siegelschicht beispielsweise einen Handhabungsabschnitt oder eine Lasche aufweisen, die bevorzugt über den Tubendeckel übersteht und an dem die Siegelschicht angreifbar ist. Der Handhabungsabschnitt kann in einem überstehenden Bereich auch zurückgefaltet sein.

In einer weiteren, besonders vorteilhaften Ausgestaltung der Verpackungstube kann vorgesehen sein, dass innerhalb des Tubendeckels, von der Siegelschicht abgedeckt, ein Gegenstand, insbesondere ein Kleinspielzeug oder ein Werkzeug eingelegt ist. Wenn nützliche Gegenstände zur Benutzung der Verpackungstube oder deren Inhalt, wie beispielsweise Werkzeuge in dem Tubendeckel unterhalb der Siegelschicht angeordnet und eingelagert sind, kann dies insgesamt dazu führen, dass die Verpackungstube und das darin bevorratete Produkt mit weniger Verpackungsmaterial in den Vertrieb oder Handel gelangen kann. Zusätzliche Verpackungen, die die Tube und das Werkzeug bevorraten, können dann vermieden werden.

Als Werkzeuge können beispielsweise kleine Spatel, Spachtel, Pinsel, Schwämme, Kämme, Bürsten oder dergleichen vorgesehen sein, die bei der Verwendung der Verpackungstube oder des in der Verpackungstube bevorrateten Produkts notwendig oder vorteilhaft zum Einsatz kommen. Dabei kann gegebenenfalls auch vorgesehen sein, dass die Werkzeuge im Tubendeckel unterhalb der Siegelschicht komprimiert angeordnet sind. Dies kann beispielsweise für Tücher oder Schwämme - natürlichen oder synthetischen Ursprungs - der Fall sein. So kann auch an einem verhältnismäßig kleinen Tubendeckel ein verhältnismäßig großes Werkzeug, insbesondere Schwamm oder Tuch bevorratet werden.

In einer weiteren, besonders vorteilhaften Ausgestaltung kann vorgesehen sein, dass die Siegelschicht eine optische und/oder haptische Markierung aufweist. Dies kann entweder als Güte- oder Qualitätssiegel verwendet werden oder Informationen zum Tubeninhalt oder zur Tube selber dokumentieren und transportieren. So können beispielsweise Informationen über den Herstellungsprozess, das Qualitätsmanagement, insbesondere über diesbezügliche Zeitpunkte oder Zeitstempel, als Markierung auf der Siegelschicht angebracht werden.

In einer weiteren, besonders vorteilhaften Ausführungsform der Verpackungstube kann vorgesehen sein, dass der Tubenhals radial nach außen ragende Sicherungsmittel und der Tubendeckel nach radial innen ragende Sicherungsmittel aufweist, sodass nach dem einmaligen, destruktiven Trennen des Tubendeckels vom Tubenkopf ein wiederholtes oder reversibles Öffnen und Schließen der Tube mittels des Tubendeckels ermöglicht wird, in dem die jeweiligen Sicherungsmittel miteinander in Eingriff gebracht werden oder voneinander gelöst werden.

Besonders bevorzugt kann vorgesehen sein, dass die Sicherungsmittel als Gewinde, als Bajonettverschlussmittel, als Rastmittel und/oder als Klemmmittel ausgebildet sind. Sofern die Sicherungsmittel als Gewinde ausgebildet sind, kann besonders vorteilhaft vorgesehen sein, dass diese unterbrochen sind und somit eine Sicherungswirkung bereitstellen, beispielsweise, wenn in der Verpackungstube unter Druck stehende Produkte bevorratet werden.

In einer weiteren vorteilhaften Ausführungsform der Verpackungstube kann vorgesehen sein, dass diese im Bereich des Tubenkpfes auf einer Innenseite oder einer Innenoberfläche ein Inlay oder Insert aufweist. Das Inlay oder Insert kann als Formkörper nachträglich zu dem Verbinden zwischen Tubenkopf und Tubenmantel von innen in den Tubenkopf eingeführt und dort in entsprechenden Vertiefungen verrastet werden. Das Insert kann beispielsweise als konische Rondelle ausgeführt sein. Durch das Insert kann die Stabilität des Tubenkopfes weter verbesert werden. Auch kann das Insert als Barriere wirken. Alternativ zu einer nachträglichen Anordnung in der Verpackungstube kann auch vorgesehen sein, dass das Insert bereits vor dem Vorformling in das Formgebungswerkzeug, bevorzugt auf die Patrize, eingebracht wird und dann zusammen mit dem Tubenkörper durch Verpressen oder Ausformen des Vorformlings mit dem Tubenkopf verbunden wird.

Das eingangs genannte Problem wird auch durch ein Verfahren zum Herstellen einer Verpackungstube gelöst, bei dem unter Ausbildung eines Tubenkopfes ein Vorformling verpresst und dadurch auch eine Verbindung des Tubenkopfes mit einem, bevorzugt aus einem mehrlagigen Laminat hergestellten, Tubenkörper hergestellt wird, wobei das Verfahren einen Verfahrensschritt des Einbringens des Vorformlings und des Tubenkörpers in ein mehrteiliges Formgebungswerkzeug in einen geöffneten Zustand umfasst und das Verfahren zu dem Verfahrensschritt des Verschließen des Formgebungswerkzeugs umfasst, bei dem während des Übergangs in den geschlossenen Zustand der Tubenkopf aus dem Vorformling ausgeformt und die Verbindung mit den Tubenkörper hergestellt wird, wobei erfindungsgemäß vorgesehen ist, dass bei Ausformen des Tubenkopfes ein in einer Längsrichtung an einem Tubenhals des Tubendeckels anschließender, einstückig mit dem Tubenhals, insbesondere als Teil des Tubenkopfes, ausgebildeter Tubendeckel ausgebildet wird, wobei ein Sollbruchabschnitt des Tubenkopfes zwischen dem Tubenhals und dem Tubendeckel ausgebildet wird.

Wie oben bereits erwähnt, ist der einstückig an den Tubenkopf angeformte Tubendeckel besonders sinnvoll, um das Herstellungsverfahren zu optimieren, Verfahrensschritte zu reduzieren und Material einzusparen. Durch das erfindungsgemäße Verfahren wird zudem ermöglicht, die Vorteile eine einstückig an den Tubenkopf angeformten Tubendeckels mit den Vorteilen einer spezifisch oder individuell an den Einsatzzweck angepassten Tubenkörper, insbesondere mehrlagigen Tubenkörper, zu verbinden, ohne dass die besonderen Anforderungen an das Entformen des Tubendeckels samt Tubenkopf die notwendige Verbindung zwischen dem Tubenkopf und dem Tubenkörper nachteilig beeinträchtigen oder unmöglich machen.

So können sehr viel variablere Verpackungstuben hergestellt werden, die unter anderem auch ein deutlich höheres Maß an Nachhaltigkeit aufweisen, als wenn die gesamte Verpackungstube einschließlich Tubenkörper, Tubenkopf und Tubendeckel in einem Spritzgussverfahren hergestellt wird. So erlaubt das vorliegende Verfahren beispielsweise den Einsatz von Tubenkörpern mit Material oder Materiallagen aus Recycelmaterial, Material aus nachwachsenden Rohstoffen oder anderen, nachhaltigen Rohstoffquellen.

Gemäß einer vorteilhaften Ausführungsform des Verfahrens kann vorgesehen sein, dass bei der Ausformung des Tubenkopfes auf einer radialen Außenoberfläche des Tubenkopfes und auf einer radialen Innenoberfläche des Tubendeckels Sicherungsmittel ausgebildet werden.

In einer vorteilhaften Ausgestaltung des Verfahrens kann zudem vorgesehen sein, dass beim Überführen des Werkzeugs in den geöffneten Zustand nach dem Ausformen des Tubenkopfes die Sicherungsmittel auf der Außenoberfläche des Tubenhalses entformt werden und die Sicherungsmittel auf der radialen Innenoberfläche des Tubenkopfes abgestreift werden, insbesondere oder ein radiales Kollabieren des dazugehörigen Teils des Formgebungswerkzeugs, insbesondere eines inneren Teils der Matrize. Dadurch werden zwar entsprechende hohe Kräfte in Längsrichtung der Verpackungstube nötig, um die radial nach innen vorstehenden Sicherungsmittel des Tubendeckels von den komplementären Ausnehmungen des Formgebungswerkzeugs zu entfernen, insbesondere abzustreifen. Dabei hat sich jedoch in besonders überraschenderweise ergeben, dass diese Kräfte in Längsrichtung aufgebracht werden können auch ohne den noch jungen und gegebenenfalls nicht vollständig ausgehärteten Tubenkopf und die Verbindung zwischen Tubenkopf und Tubenkörper zu beeinträchtigen oder zu verschlechtern.

In einer weiteren, besonders vorteilhaften Variante des Verfahrens kann vorgesehen sein, dass nach dem Ausformen, und bevorzugt nach einem Abkühlen, des Tubenkopfes eine Siegelschicht auf einem offenen Ende des Tubendeckels angebracht und mit dem Tubendeckel oder von dem Tubendeckel entfernbar verbunden wird.

In einer weiteren, besonders vorteilhaften Ausgestaltung des Verfahrens kann vorgesehen sein, dass vor dem Anbringen der Siegelschicht ein Gegenstand, bevorzugt ein Kleinspielzeug oder ein Werkzeug, in dem Tubendeckel abgelegt oder in den Tubendeckel eingelagert wird. Wie oben bereits ausgeführt, können als Werkzeuge kleinere Spatel, Spachteln, Pinsel, Kämme, Bürsten, Tücher oder Schwämme verwendet werden und gemäß des vorteilhaften Verfahrensschritts in den Tubendeckel abgelegt oder in den Tubendeckel eingebracht und/oder komprimiert werden.

In einer weiteren, besonders vorteilhaften Ausführungsform des Verfahrens kann vorgesehen sein, dass die Siegelschicht mit einer optischen und/oder haptischen Markierung versehen wird.

Die vorliegende Erfindung wird nachfolgend anhand von rein schematischen vorteilhaften Ausführungsformen der Erfindung darstellenden Zeichnungen erläutert werden.

Darin zeigen:
- Fig. 1:: einen Schnitt durch einen Teil einer erfindungsgemäßen Vorrichtung zum Herstellen einer Verpackungstube;
- Fig. 2a:: eine erste perspektivische Darstellung eines Teils einer erfindungsgemäßen Verpackungstube;
- Fig. 2b:: eine zweite Perspektivdarstellung eines Teils einer erfindungsgemäßen Verpackungstube;
- Fig. 3a bis Fig. 3c:: vier Schnittdarstellungen zur Veranschaulichung der Verwendung der erfindungsgemäßen Verpackungstube;
- Fig. 4:: eine perspektivische Darstellung eines Teils einer erfindungsgemäßen Verpackungstube in einer alternativen Ausführungsform;
- Fig. 5:: eine Schnittdarstellung eines Teils einer erfindungsgemäßen Verpackungstube in einer alternativen Ausführungsform.

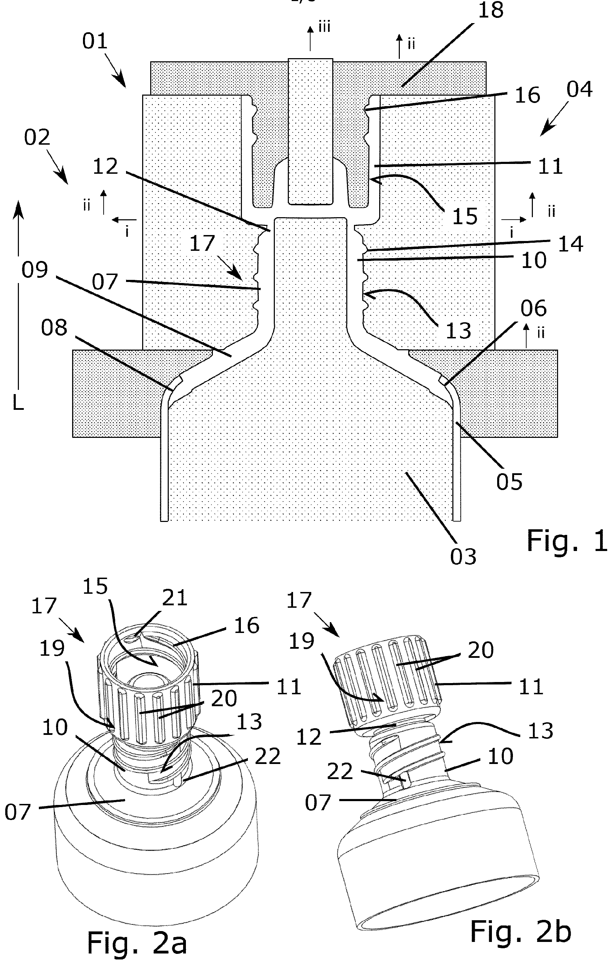

Die Fig. 1 zeigt ein Teil einer Vorrichtung 01 zum Herstellen einer Verpackungstube. Der dargestellte Ausschnitt der Vorrichtung 01 zeigt ein Formgebungswerkzeug 02 in einem geschlossenen Zustand. Das Formgebungswerkzeug 02 ist mehrteilig ausgebildet und umfasst eine Patrize 03 sowie eine mehrteilige Matrize 04. Mit dem Formgebungswerkzeug 02 wird ein Tubenkörper 05, der bevorzugt als Mehrschichtlaminat ausgebildet ist, gehalten und in einem Endabschnitt 06 in Längsrichtung L mit einem Tubenkopf 07 verbunden.

Bevorzugt kann in einer - der Darstellung der Fig. 1 vorangegangenen - geöffneten Position des Formgebungswerkzeugs 02 ein Vorformling des Tubenkopfes 07, beispielsweise in Form eines erhitzten Kunststoffrings, beispielsweise in Form eines Donuts, auf die Patrize 03 aufgebracht werden, bevor sich das Formgebungswerkzeug 02 schließt oder in einen geschlossenen Zustand übergeht. Beim Übergang in den geschlossenen Zustand des Formgebungswerkzeugs 03 wird dann aus dem Vorformling, beispielsweise aus erwärmtem Kunststoff, der Tubenkopf 07 ausgeformt und gleichzeitig die Verbindung 08 zwischen dem Tubenkopf 07 und dem Tubenkörper 05 ausgebildet. Ein Anspritzen des Tubenkopfes samt Tubendeckel anstatt des Ausformen eines Vorformlings ist ebenfalls eine mögliche Ausgestaltung der vorliegenden Erfindung. Der Tubenkopf ist in der Fig. 1 einlagig dargestellt. Durch Co-Extrusion von einem mehrlagigen Vorformling kann aber auch ein mehrlagiger oder mehrschichtiger Tubenkopf und/oder Tubendeckel hergestellt werden, wobei bevorzugt eine Lage oder Schicht als Barriereschicht dient.

Die mehrteilige Matrize 04 ist so ausgebildet, dass sie nicht nur einen Schulterabschnitt 09 und einen Tubenhals 10 ausbildet, sondern in Längsrichtung an den Tubenhals 10 anschließend und mit dem Tubenkopf 07 oder dem Tubenhals 10 einstückig verbunden wird. Als Teil des Tubenkopfes 07 auch ein umgedrehter Tubendeckel 11 ausgebildet und ausgeformt, der über einen Sollbruchabschnitt 12 mit dem Tubenkopf, bevorzugt mit dem Tubenhals verbunden ist.

Der Tubenkopf 07, insbesondere der Tubenhals 10 weist auf einer Außenoberfläche 13 Sicherungsmittel 14 auf, die nach radial außen vorstehen und von entsprechend komplementärgebildeten Ausnehmungen in dem Formgebungswerkzeug, insbesondere der mehrteiligen Matrize ausgeformt werden. Der Tubendeckel 11 weist auf einer Innenoberfläche 15 Sicherungsmittel 16 auf, die nach radial innen vorstehen und ebenfalls durch komplementäre Ausnehmungen im Bereich der mehrteiligen Matrize 04 ausgebildet werden.

Nachdem der Tubenkopf 07 ausgeformt ist, und eine entsprechende Stabilität erreicht hat und ferner auch die Verbindung 08 zwischen Tubenkörper 05 und Tubenkopf 07 eine Grundstabilität erreicht hat, wird das Formgebungswerkzeug 02 geöffnet und die Verpackungstube 17 wird entformt.

Die Richtungspfeile i bis iii in der Fig. 1 symbolisieren die Bewegungsrichtungen und die Bewegungsabfolge der einzelnen Teile der Matrize beim Übergang aus dem dargestellten, geschlossenen Zustand in einen geöffneten Zustand des Formgebungswerkzeugs 02. Dabei ist insbesondere zu erkennen, dass das Werkzeugteil 18 des Formgebungswerkzeug 02, welches die Innenoberfläche 15 und die Sicherungsmittel 16 des Tubendeckels 11 ausformt nicht faltbar oder kollabierbar ausgebildet ist, sodass die Sicherungsmittel 15, die nach radial innen vorragend ausgebildet sind und das Werkzeugteil 18 aneinander abgleiten müssen. Dazu wird ein merkliches Maß an Kraft in Längsrichtung L benötigt. Überraschenderweise ist jedoch dieser Entformungsvorgang möglich, ohne die Verbindung 08 zwischen dem Tubenkörper 05 und dem Tubenkopf 07 nachteilig zu beeinträchtigen oder ansonsten den Tubenkopf 07, der während des Öffnen des Formgebungswerkzeugs 02 und des Entformens aus dem Formgebungswerkzeugs 02 in der Regel noch nicht vollständig erkaltet und/oder erstarrt ist zu beschädigen oder nachteilig zu beeinträchtigen.

Die Sicherungsmittel 14 und 16 können beispielsweise als Gewinde oder als unterbrochenes Gewinde ausgebildet sein.

In den Darstellungen in der Fig. 2a und 2b ist eine perspektivische Ansicht eines oberen Teils einer Verpackungstube 17 dargestellt. Wie in den Darstellungen erkennbar, ist der umgedrehte Tubendeckel 11 in Längsrichtung unmittelbar an den Tubenhals 10 angeformt, wobei der Übergang durch den Sollbruchabschnitt 12 gebildet wird. Auf der Außenoberfläche 19 des Tubendeckels 11 können zusätzliche Stege 20 oder vergleichbare Strukturierungen vorgesehen sein, die als Griffhilfe oder Greifhilfe zur Bedienung des Tubendeckels 11, sowohl beim erstmaligen destruktiven Abtrennen vom Tubenkopf 07 als auch beim späteren reversiblen Aufbringen und Entfernen dienen können.

Auf der Innenoberfläche 15 des Tubendeckels 11 können die Sicherungsmittel 16 neben dem Gewinde auch einen Vorsprung 21 zur Ausbildung einer Einrastfunktion des Tubendeckels 11 beim reversiblen Verschließen des Tubenkopfes 07 umfassen. Gleichermaßen kann die Außenoberfläche 13 des Tubenkopfes 07 ein weiteren Vorsprung 22 aufweisen, der beim Aufschrauben des destruktiv abgetrennten Tubendeckels 11 vom Tubenkopf 07 beim Aufschrauben des Tubendeckels 11 auf den Tubenkopf 07 zu einem Einrasten führt, wenn der Tubendeckel 11 eine Endposition erreicht hat.

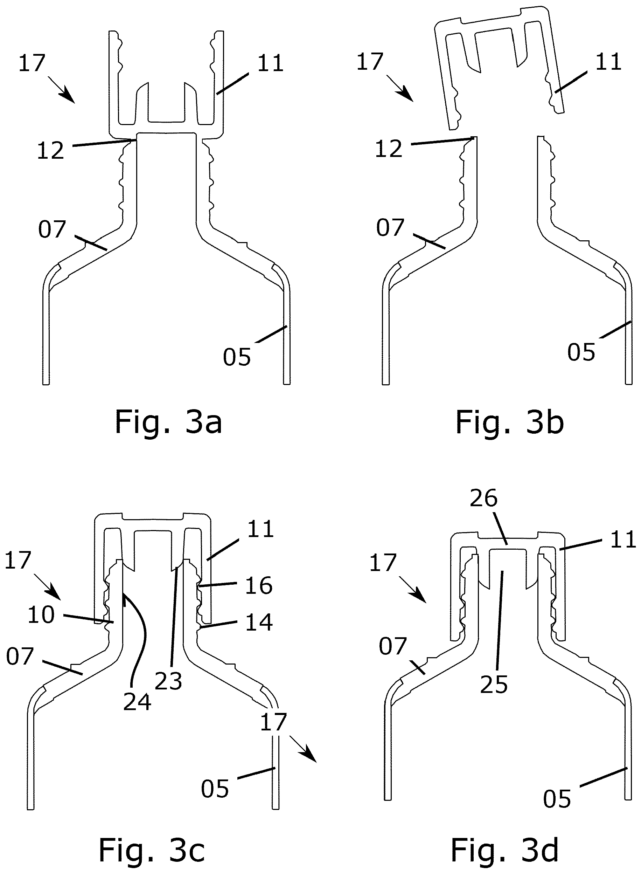

In den Fig. 3a bis 3d wird beispielhaft dargestellt, wie nach einem erstmaligen und einmaligen, destruktiven Abtrennen des Tubendeckels 11 vom Tubenkopf 07 der Tubendeckel 11 mit dem Tubenkopf 07 zum Verschluss der Verpackungstube 17 verbunden wird. In der Fig. 3a sind Tubendeckel 11 und Tubenkopf 07 noch über den Sollbruchabschnitt 12 stoffschlüssig miteinander verbunden. Eine Kraftaufwendung quer zur Längsrichtung L oder eine Rotationsbewegung um die Längsrichtung L kann beispielsweise dafür sorgen, dass der Sollbruchabschnitt getrennt und damit auch der Tubendeckel 11 vom Tubenkopf 07 getrennt wird. Der Tubenkopf 07 kann ein innenseitig angeordnetes Insert aufweisen (in der Fig. 3a nicht dargestellt) Das Insert kann nachträglich im Tubenkopf angeordnet werden und dort mechanisch gesichert werden, beispielsweise durch Verrasten. Das Insert kann aber auch bereits beim Ausformen des Tubenkopfes 07 in das Formgebungswerkzeug gemäß Fig. 1 eingebracht, zum Beispiel im geöffneten Zustand auf die Patrize aufgebracht werden.

Im Anschluss daran kann der Tubendeckel 11 um etwa 180° in Längsrichtung gedreht werden, was in der Darstellung der Fig. 3b dargestellt ist. Im Anschluss daran kann, gemäß Fig. 3c der Tubendeckel 11 mit dem Tubenkörper 07 in der umgedrehten Richtung wieder verbunden werden, wozu bevorzugt die Sicherungsmittel 14 und 16, beispielsweise in Form von komplementär gestalteten Gewinden, teilweise miteinander in Eingriff gebracht werden. Dabei kann eine Führungskontur 23 des Tubendeckels 11, beispielsweise in Form eines konischen Stopfens an einer Innenoberfläche 24 des Tubenhals 10 führend zur Anlage kommen.

Bei Erreichen einer Endposition der Sicherungsmittel 14, 16 kann beispielsweise eine Verrastung erfolgen, zu der die Vorsprünge 21, 22 - in der Fig. 3 nicht dargestellt - aneinander vorbeibewegt werden.

Die Endposition ist in der Fig. 3d dargestellt. Der Tubendeckel 11 verschließt den Tubenkopf 07 und dessen Auslassöffnung 25, in der die Innenoberfläche des Tubendeckels 11 an der Außenoberfläche des Tubenhals 10 zur Anlage kommt und die Führungskontur 23 zusammen mit einem Boden 26 des Tubendeckels 11 die Auslassöffnung 25 verschließt und abdichtet.

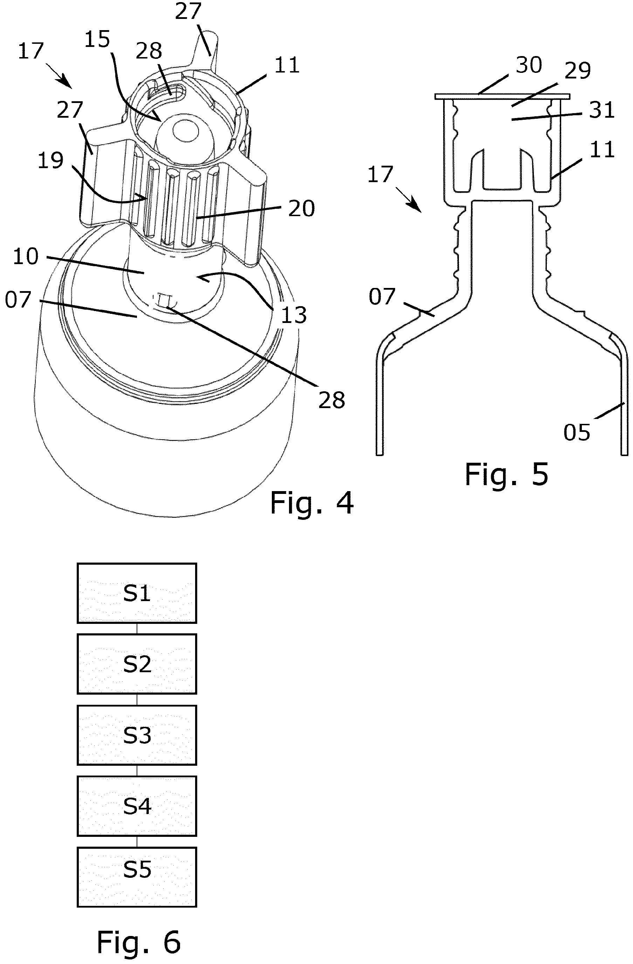

Die Fig. 4 zeigt eine alternative Ausgestaltung des Tubenkopfes 07 mit einstückig angeformten Tubendeckel 11. Zusätzlich zu den Stegen 20 auf der Außenoberfläche 19 des Tubendeckels 11 sind Flügel 27 vorgesehen, die ebenfalls als Greifhilfe dienen. Auf der Innenoberfläche 15 des Tubendeckels 11 sind Bajonettverschlussmittel 28 vorgesehen, die mit Komplementär ausgebildeten Bajonettverschlussmitteln 28 auf der Außenoberfläche 13 des Tubenhalses 10 die reversible Öffnung und den Verschluss des Tubenkopfes 07 mit dem Tubendeckel 11 ermöglichen.

In der Ausführungsform der Fig. 5 ist auf einem offenen Ende 29 des Tubendeckels 11 eine Siegelschicht 30 angebracht und mit dem offenen Ende 29 des Tubendeckels 11 verbunden. In dem durch die Siegelschicht 30 und den Tubendeckel 11 abgeschlossenen Hohlraum 31 können kleinere Werkzeuge, wie beispielsweise Spatel, Spachtel, Pinsel, Bürste, Schwamm oder Tuch eingelagert werden. Alternativ können Kleinspielzeuge eingelagert werden.

Die Siegelschicht kann beispielsweise geklebt oder geschweißt sein. Die Siegelschicht kann beispielsweise aus Papier, Pappe, Karton oder Kunststoff gebildet sein. Auch ein Verbundmaterial oder ein Material mit mehreren Schichten kann vorteilhaft realisiert werden.

Auf der Siegelschicht 30 können vorteilhaft Markierungen angeordnet oder aufgebracht sein, die optischer und/oder haptischer Natur sind. Diese in der Fig. 5 nicht dargestellten Markierungen können Informationen über die Verpackungstube, über den Inhalt der Verpackungstube oder sonstige Informationen umfassen.

Die Fig. 6 skizziert ein Herstellungsverfahren unter Verwendung einer Vorrichtung zum Herstellen von Verpackungstuben gemäß der vorliegenden Erfindung. In einem ersten Verfahrensschritt S1 kann beispielsweise aus einem mehrlagigen bogenförmigen Laminat, beispielsweise durch Umformen zu einer Rohrform und Verschweißen entlang einer Längsnaht, ein Endlostubenkörper hergestellt werden, anschließend vereinzelt oder abgelängt wird, um einzelne Tubenkörper auszubilden.

In einem Verfahrensschritt S2 können so oder ähnlich hergestellte Tubenkörper an ein Formgebungswerkzeug übergeben werden, in dem an einem Ende in Längsrichtung des Tubenkörpers ein Tubenkopf mit samt einstückig angeformten Tubendeckel ausgeformt und mit dem Tubenkörper verbunden wird. Dazu kann beispielsweise in dem Verfahrensschritt S2 ein Verpressen eines Vorformlings oder ein Anspritzen eines Tubenkopfes in ein Spritzgusswerkzeug vorgesehen sein.

Nach dem Entformen des mit dem Tubenkopf verbundenen Tubenkörpers aus dem entsprechenden Formgebungswerkzeug kann die Verpackungstube, bevorzugt automatisch an eine Füll- oder Einlegeeinrichtung übergeben werden, an dem über das offene Ende des Tubendeckels ein Gegenstand, beispielsweise ein Werkzeug oder ein Spielzeug in den umgedrehten Tubendeckel eingelegt wird. Dies kann beispieslweise in dem Verfahrensschritt S3 stattfinden. An einer weiteren Bearbeitungsstation der Vorrichtung, die beispielsweise eine Siegeleinrichtung umfasst, kann in einem folgenden Verfahrensschritt S4 eine Siegelschicht auf das offene Ende des Tubendeckels aufgebracht und diese mit dem offenen Ende des Tubendeckels verbunden werden. Dazu kann beispielsweise die Siegelschicht mit dem Tubendeckel verschweißt oder verklebt werden.

In einem weiteren Verfahrensschritt S5 kann vorgesehen sein, dass die Siegelschicht von einer Markierungseinheit mit einer haptischen und/oder optischen Markierung versehen wird. Im Anschluss daran kann die Verpackungstube mit vielen anderen Verpackungstuben in eine Zwischenverpackung verbracht werden, bevor die Verpackungstuben über ein rückseitiges, offenes Ende befüllt und nach der Befüllung verschlossen werden.

Die vorangehend beschriebenen Schritte müssen nicht zwangsläufig in der beschriebenen Reihenfolge stattfinden. Es kann alternativ auch vorgesehen sein, dass das Befüllen des Tubendeckels mit einem Gegenstand und das anschließende Siegeln des offenen Endes des Tubendeckels oder nur das Siegeln des offenen Endes des Tubendeckels zu einem späteren Zeitpunkt, beispielsweise im Anschluss an ein rückseitiges Befüllen und Verschließen der Verpackungstube stattfindet. Grundsätzlich ist es jedoch vorteilhaft, wenn die Siegelschicht möglichst früh nach dem Ausformen des einstückig über den Sollbruchabschnitt mit dem Tubenkopf verbundenen Tubendeckel angebracht und mit dem Tubendeckel verbunden wird, um eine Verschmutzung oder Kontamination des inneren des Tubendeckels zu verhindern.

### Bezugszeichen

- 01: Vorrichtung
- 02: Formgebungswerkzeug
- 03: Patrize
- 04: Matrize
- 05: Tubenkörper
- 06: Endabschnitt
- 07: Tubenkopf
- 08: Verbindung
- 09: Schulterabschnitt
- 10: Tubenhals
- 11: Tubendeckel
- 12: Sollbruchabschnitt
- 13: Außenoberfläche
- 14: Sicherungsmittel
- 15: Innenoberfläche
- 16: Sicherungsmittel
- 17: Verpackungstube
- 18: Werkzeugteil
- 19: Außenoberfläche
- 20: Steg
- 21: Vorsprung
- 22: Vorsprung
- 23: Führungskontur
- 24: Innenoberfläche
- 25: Auslassöffnung
- 26: Boden
- 27: Flügel
- 28: Bajonettverschlussmittel
- 29: offenes Ende
- 30: Siegelschicht
- 31: Hohlraum

- L: Längsrichtung

- S1: Verfahrensschritt
- S2: Verfahrensschritt
- S3: Verfahrensschritt
- S4: Verfahrensschritt
- S5: Verfahrensschritt

## Patentansprüche

1. Vorrichtung zum Herstellen einer Verpackungstube (17) mit einem Formgebungswerkzeug (02) zum Ausformen eines Tubenkopfes (07), bevorzugt durch Verpressen eines Vorformlings, und Verbinden des Tubenkopfes (07) mit einem, bevorzugt aus einem Mehrschichtlaminat hergestellten, Tubenkörper (05) zur Herstellung einer Verpackungstube (17), mit einem mehrteiligen Formgebungswerkzeug (02), insbesondere umfassend eine Patrize (03) und eine mehrteilige Matrize (04), in welches in einem geöffneten Zustand ein Vorformling und ein Tubenkörper (05) einbringbar sind und welches bei einem Übergang in einen geschlossenen Zustand den Tubenkopf (07) aus dem Vorformling ausformt und die Verbindung (08) mit dem Tubenkörper (05) herstellt,
**dadurch gekennzeichnet,**
**dass** das mehrteilige Formgebungswerkzeug (02) so geformt ist, dass in dem geschlossenen Zustand eine Kavität umschlossen wird, die in einer Längsrichtung (L) an einen Tubenhals (10) des Tubenkopfes (07) anschließenden, einstückig mit dem Tubenkopf (07) ausgebildeten, umgedrehten Tubendeckel (11) ausbildet, wobei die Kavität zudem so geformt ist, dass der Tubenhals (10) und der Tubendeckel (11) über einen Sollbruchabschnitt (12) des Tubenkopfes (07) miteinander verbunden sind.

2. Vorrichtung nach Anspruch 1,
**dadurch gekennzeichnet,**
**dass** die Matrize (04) Ausnehmungen und Vorsprünge umfasst die so geformt sind, dass im geschlossenen Zustand an dem Tubenhals (10) radial nach außen ragende Sicherungsmittel (14) und in dem Tubendeckel (11) nach radial innen ragende Sicherungsmittel (16) ausgebildet werden.

3. Vorrichtung nach Anspruch 2,
**dadurch gekennzeichnet,**
**dass** der Teil der Matrize (04), der die nach radial innen ragenden Sicherungsmittel (16) ausbildet radial unbeweglich, insbesondere nicht kollabierbar, und bevorzugt einteilig ausgebildet ist.

4. Vorrichtung nach einem der vorhergehenden Ansprüche,
**dadurch gekennzeichnet,**
**dass** ein radial äußerer Teil der Matrize (04) mehrere Werkzeugteile (18) umfasst, die so mit einem Antrieb verbunden sind, dass bei der Überführung in den geöffneten Zustand eine Bewegung nach radial außen stattfindet.

5. Vorrichtung nach einem der vorhergehenden Ansprüche,
**gekennzeichnet durch**
eine Siegeleinrichtung, die dazu eingerichtet ist ein offenes Ende (29) des Tubendeckel (11) mit einer Siegelschicht (30), bevorzugt einer Siegelfolie, zu verschließen und die Siegelschicht (30) mit dem Tubendeckel (11) zu verbinden.

6. Vorrichtung nach Anspruch 5,
**dadurch gekennzeichnet,**
**dass** die Siegeleinrichtung Schweißmittel oder Auftragsmittel für Haftvermittler und/oder Aktivierungsmittel für Haftvermittler umfasst, mit denen die Siegelschicht (30) mit dem Tubendeckel (11) verbunden wird.

7. Vorrichtung nach einem der vorhergehenden Ansprüche,
**gekennzeichnet durch**,
eine Füll- oder Einlegeeinrichtung, die dazu eingerichtet ist einen Gegenstand in den Tubendeckel (11) einzubringen.

8. Verpackungstube mit einem, bevorzugt durch Formpressen hergestellten, Tubenkopfes, der in einem Schulterbereich mit einem, bevorzugt aus einem Mehrschichtlaminat hergestellten, separaten Tubenkörper stoffschlüssig verbunden ist,
**dadurch gekennzeichnet,**
**dass** in einer Längsrichtung (L) an einen Tubenhals (10) des Tubenkopfes (07) anschließend ein einstückig mit dem Tubenkopf (07) [als Teil des Tubenkopfes (07)] ausgebildeter, umgedrehter Tubendeckel (11) angeordnet ist, wobei der Tubenhals (10) und der Tubendeckel (11) über einen Sollbruchabschnitt (12) des Tubenkopfes (07) miteinander verbunden sind.

9. Verpackungstube nach Anspruch 8,
**dadurch gekennzeichnet,**
**dass** ein offenes Ende (29) des Tubendeckels (11) mit einer Siegelschicht (30), bevorzugt einer Siegelfolie, verschlossen ist.

10. Verpackungstube nach Anspruch 9,
**dadurch gekennzeichnet,**
**dass** im Tubendeckel (11), von der Siegelschicht (30) abgedeckt, ein Gegenstand, insbesondere ein Werkzeug oder Kleinspielzeug, eingelegt ist.

11. Verfahren zum Herstellen einer Verpackungstube unter Ausbildung eines Tubenkopfes durch Verpressen eines Vorformlings und Verbinden des Tubenkopfes mit einem, bevorzugt aus einem mehrlagigen Laminat hergestellten, Tubenkörper, umfassend die Verfahrensschritte:
Einbringen des Vorformlings und des Tubenköpers in ein mehrteiliges Formgebungswerkzeug in einem geöffneten Zustand -Verschließen des Formgebungswerkzeugs, wobei bei einem Übergang in einen geschlossenen Zustand der Tubenkopf aus dem Vorformling ausgeformt und die Verbindung mit dem Tubenkörper hergestellt wird,
**dadurch gekennzeichnet,**
**dass** beim Ausfomen des Tubenkopfes (07) ein in einer Längsrichtung (L) an einen Tubenhals (10) des Tubenkopfes (07) anschließender, einstückig mit dem Tubenhals (10) [als Teil des Tubenkopfes (07)] ausgebildeter Tubendeckel (11) ausgebildet wird, wobei ein Sollbruchabschnitt (12) des Tubenkopfes (07) zwischen Tubenhals (10) und Tubendeckel (11) ausgebildet wird.

12. Verfahren nach Anspruch 11
**dadurch gekennzeichnet,**
**dass** bei der Ausformung des Tubenkopfes (07) auf einer radialen Außenoberfläche (13) des Tubenhalses (10) und auf einer radial inneren Oberfläche (15) des Tubendeckels (11) Sicherungsmittel (14,16) ausgebildet werden.

13. Verfahren nach Anspruch 12,
**dadurch gekennzeichnet,**
**dass** beim Überführen des Werkzeugs in den geöffneten Zustand nach dem Ausformen des Tubenkopfes (07) die Sicherungsmittel (16) auf der Außenoberfläche (13) des Tubenhalses (10) entformt werden und die Sicherungsmittel (16) auf der Innenoberfläche (15) abgestreift werden, insbesondere ohne ein radiales Kollabieren des dazugehörigen inneren Teils Matrize (04).

14. Verfahren nach einem der Ansprüche 1 bis 13,
**dadurch gekennzeichnet,**
**dass** nach dem Ausformen, und bevorzugt nach einem Abkühlen, des Tubenkopfes (07) eine Siegelschicht (30) auf einem offenen Ende (29) des Tubendeckels (11) angebracht und von dem Tubendeckel (11) entfernbar verbunden wird.

15. Verfahren nach Anspruch 14,
**dadurch gekennzeichnet,**
**dass** vor dem Anbringen der Siegelschicht (30) ein Gegenstand, bevorzugt ein Werkzeug oder ein Kleinspielzeug, in dem Tubendeckel (11) abgelegt wird.
